# EUROPÄISCHE PATENTSCHRIFT

(11) **EP 2 935 784 B1**
(45) Veröffentlichungstag und Bekanntmachung des Hinweises auf die Patenterteilung: **08.02.2017**
(21) Anmeldenummer: 13811534.0
(22) Anmeldetag: 19.12.2013
(51) Int. Cl.: E21D 21/00, F16B 1/00

(54) **VERBINDUNGSMITTEL MIT FORMGEDÄCHTNIS**
CONNECTION MEANS WITH SHAPE MEMORY
MOYEN D'ASSEMBLAGE À MÉMOIRE DE FORME

(30) Priorität: 21.12.2012 DE 102012113053
(43) Veröffentlichungstag der Anmeldung: 28.10.2015
(73) Patentinhaber: ThyssenKrupp Steel Europe AG, 47166 Duisburg (DE)
(72) Erfinder: FECHTE-HEINEN, Rainer, 46238 Bottrop (DE); PATBERG, Lothar, 47445 Moers (DE); KEVENHÖRSTER, Joseph Georg, 44805 Bochum (DE); COTT, Andreas, 99880 Waltershausen (DE); FLASKAMP, Thomas, 47051 Duisburg (DE); WIESCHALLA, Vanessa, 47800 Krefeld (DE); HILFRICH, Erik, 40470 Düsseldorf (DE)
(74) Vertreter: ThyssenKrupp Intellectual Property GmbH
(86) Internationale Anmeldenummer: PCT/EP2013/077475
(87) Internationale Veröffentlichungsnummer: WO 2014/096247

(56) Entgegenhaltungen:
- EP-A1- 1 888 878
- DE-A1- 2 615 572
- DE-T2- 60 107 606
- JP-A- H03 148 000
- US-A- 4 195 952

## Beschreibung

Die Erfindung betrifft ein Verbindungsmittel zur Bereitstellung einer form- und/oder kraftschlüssigen Verbindung zwischen mindestens zwei Verbindungspartnern, wobei das Verbindungsmittel mindestens einen ersten Bereich aufweist, welcher dafür ausgebildet ist, mit dem ersten Verbindungspartner über einen Form- und/oder Kraftschluss im Eingriff zu stehen, und mindestens ein zweiter Bereich vorgesehen ist, welcher dafür ausgebildet ist, mit dem mindestens zweiten Verbindungspartner über einen Form- und/oder Kraftschluss im Eingriff zu stehen. Ein gattungsgemäßes Verbindungsmittel ist z.B. aus der JP 03-148000 bekannt.

Zur Verbindung von zwei Verbindungspartnern werden Verbindungsmittel verwendet, welche häufig über Kraft- und/oder Formschlüsse eine feste Verbindung zwischen den Verbindungspartner bereitstellen. Beispiele hierfür sind Schraubverbindungen, Dübel etc. Verbindungsmittel können zur Verbindung von zwei Bauteilen aber auch beispielsweise beim Bau zur Befestigung der Tunnelauskleidungen am Erdreich bzw. am Gebirge bzw. zur Verbindung unterschiedlicher Schichten desselben verwendet werden. Diese werden dann als Gebirgs- oder Felsanker bezeichnet. Entsprechende Verbindungen sind häufig Umwelteinflüssen, beispielsweise Temperaturschwankungen, Belastungsspitzen, Erschütterungen usw. ausgesetzt, welchen die Verbindungen widerstehen müssen, ohne dass Schäden an der Verbindung oder am Bauteil entstehen. Oft besteht auch die Notwendigkeit, bei jahrelangem Einsatz die Verbindungsmittel auszutauschen. Die Montage sowie die Demontage entsprechender Verbindungsmittel gestaltete sich bisher sehr schwierig, insbesondere dann,
wenn die Verbindungsmittel sehr hohe Lasten aufnehmen müssen, wie beispielsweise Gebirgsanker in einer Tunnelverkleidung. Beispielsweise sind aus der US-Patentschrift US 4,195,952 Gebirgsanker bekannt, welche in eine Bohrung in den Fels eingesetzt werden und einen kegelförmig zusammenlaufendes Innengewinde aufweisen. Durch eine Schraube, welche während des Versenkens das kegelförmige Innengewinde aufspreizt, wird ein Kraftschluss des Gebirgsankers im Fels bereitgestellt. Nachteil dieser Lösung ist es, dass einerseits ein aufwendiger Schraubprozess durchgeführt werden muss, welcher zudem noch die Gefahr birgt, dass die Schraube im Gewindeschaft aufgrund der auftretenden Kräfte selber reißt. Eine Gesteinsschichtschraube, welche Formgedächtniseigenschaften eines Werkstoffs nutzt, ist beispielsweise aus der sowjetischen Patentanmeldung SU 1332029 A bekannt. Die Form der Gesteinsschichtschraube ist allerdings hoch komplex und erfordert sehr hohe Herstellungskosten. Die aus der sowjetischen Patentanmeldung SU 1454976 A bekannte Sicherheitsstrebe weist Sicherungen auf, welche ebenfalls einen Werkstoff mit Formgedächtniseigenschaften nutzt. Für die Bereitstellung von Verbindungsmitteln, welche eine hochbelastete form- und/oder kraftschlüssige Verbindung zwischen zwei Verbindungspartnern bereitstellt, weist die bekannte Sicherheitsstrebe jedoch einen zu geringen Kraftschluss bzw. Reibschlussbereich auf.

Die Bereitstellung eines großen Kraftschluss bzw.

Reibschlussbereiches erscheint mit der bekannten Sicherheitstrebe nicht möglich.

Hiervon ausgehend liegt der vorliegenden Erfindung die Aufgabe zugrunde, ein Verbindungsmittel zur Verfügung zu stellen, mit welchem eine kraft- und/oder formschlüssige Verbindung zwischen mindestens zwei Verbindungspartnern auf einfache Weise und kostengünstig bereitgestellt werden kann und hohen Sicherheitsanforderungen genügt.

Gemäß der Lehre der vorliegenden Erfindung wird die aufgezeigte Aufgabe dadurch gelöst, dass zumindest der zweite Bereich des Verbindungsmittels einen aus einem zumindest bereichsweisen flachen Werkstoff aus einer Eisenlegierung mit Formgedächtniseigenschaften geformten Bereich aufweist, welcher bei Aktivierung durch eine Formänderung den Form- und/oder Kraftschluss mit dem zweiten Verbindungspartner gewährleistet, der zweite Bereich ein geformtes Blech mit einem Längsschlitz bestehend aus einer Formgedächtnislegierung aufweist und das geformte Blech zumindest teilweise in Querrichtung geschlitzt ist.

Als zumindest bereichsweise flacher oder vorzugsweise flacher Werkstoff aus einer Eisenlegierung mit Formgedächtniseigenschaften wird vorliegend ein Werkstoff verstanden, welcher im Ausgangszustand zumindest bereichsweise flach ist und durch eine beispielsweise Kaltumformung in den geformten Zustand gebracht wird. In dem geformten, beispielsweise gerollten und/oder gebogenen Zustand kann der Werkstoff mit Formgedächtniseigenschaften beispielsweise über eine Erwärmung aktiviert werden, so dass durch die Formgedächtniseigenschaften der Werkstoff versucht wieder seine flache Ausgangsposition einzunehmen. Durch die Aktivierung vergrößert also der im zweiten Bereich des Verbindungsmittels vorgesehene Werkstoff seinen Durchmesser, so dass ein Kraft- und/oder Formschluss mit dem zweiten Verbindungspartner ermöglicht wird. Auf besonders einfache Art und Weise kann ein Kraft- und/oder Formschluss mit dem zweiten Verbindungspartner dadurch bereitgestellt werden, dass der zweite Bereich ein geformtes Blech mit einem Längsschlitz bestehend aus einer Formgedächtnislegierung aufweist. Das geformte Blech mit dem Längsschlitz kann beispielweise die Ankerstange eines Gebirgsankers bilden, welcher dann in eine Bohrung eingebracht werden kann, so dass bei Aktivierung des Formgedächtnisses des geformten Blechs dieses seinen Durchmesser enorm vergrößert und einen Kraft- und/oder Formschluss mit dem Gebirge bzw. dessen Schichten in der Bohrung bereitstellt. Um die Haltekräfte eines entsprechend ausgebildeten Verbindungsmittels weiter zu verbessern, ist das geformte Blech zumindest teilweise in Querrichtung geschlitzt sein und optional eine durch den Zuschnitt des Blechs erzeugte Spitze aufweisen. Durch die in dem geformten Blech vorgesehenen Querschlitze wird das Blech in verschiedene Sektoren in Längsrichtung unterteilt, welche sich auf unterschiedliche Art und Weise bei Aktivierung vergrößern können. Hierdurch kann der Form- und/oder Kraftschluss beispielsweise eines Gebirgsankers in einer Bohrung, welche Durchmesserschwankungen aufweist, deutlich verbessert werden Durch die Aufteilung in Segmente kann sich das Verbindungsmittel deutlich einfacher an den zweiten Verbindungspartner beispielsweise an die Geometrie der vorgegebenen Bohrung anpassen.

Als Werkstoff mit Formgedächtniseigenschaften ist zumindest teilweise eine Formgedächtnislegierung aus einer Eisenlegierung vorgesehen. Formgedächtnislegierungen auf Eisenbasis können nämlich sehr hohe Kraft- oder Formschlusskräfte bereitstellen bei relativ hohen Aktivierungstemperaturen bereitstellen.

Beispielsweise kommen als Formgedächtnislegierungen Eisen-Mangan-Silizium-, Eisen-Mangan-Silizium-Chrom- oder Eisen-Mangan-Silizium-Chrom-Nickel-basierte Formgedächtnislegierungen in Frage. Die genannten Eisensysteme können auch in der Massenproduktion eingesetzt werden, da diese relativ kostengünstig im Vergleich zu anderen Legierungssystemen sind. Darüber hinaus bieten die eisenbasierten Systeme die Möglichkeit, die Aktivierung der Formgedächtniseigenschaften durch eine effiziente induktive Erwärmung zu gewährleisten, so dass die Aktivierung auf besonders einfache Art und Weise gelingt. Ähnliches gilt für weitere oben nicht im Einzelnen genannte eisenbasierte Legierungen.

Gemäß einer weiteren Ausführungsform des erfindungsgemäßen Verbindungsmittels enthält die Formgedächtnislegierung neben Eisen und unvermeidbaren Verunreinigungen die folgenden Legierungselemente in Gew.-%:
12 % ≤ Mn ≤ 45 %,
1 % ≤ Si ≤ 10 %,
Cr ≤ 20 %,
Ni ≤ 20%,
Mo ≤ 20%,
Cu ≤ 20%,
Co ≤ 20%,
Al ≤ 10%,
Mg ≤ 10%,
V ≤ 2 %,
Ti ≤ 2 %,
Nb ≤ 2 %,
W ≤ 2 %,0
C ≤ 1 %,
N ≤ 1 %,
P ≤ 0,3 %,
Zr ≤ 0,3 %,
B ≤ 0,01 %.

Ein entsprechendes Legierungssystem kann auf die spezifischen Festigungseigenschaften durch die Auswahl der unterschiedlichen Legierungskomponenten sehr gut abgestimmt werden. Beispielsweise erhöht sich die Festigkeit bei Zugabe von Kohlenstoff, Chrom, Molybdän, Titan, Niob oder Vanadium deutlich.

Zugabe von Mangan, Kohlenstoff, Chrom oder Nickel stabilisieren die Austenitphase, was zu einer Erhöhung der Aktivierungstemperatur genutzt werden kann, eine Kombination von mindestens je einem Element aus den Gruppen Vanadium, Titan, Niob, Wolfram einerseits und mindestens je einem Element aus den Gruppen Kohlenstoff, Stickstoff, Bor andererseits führt zur Bildung von Ausscheidungen im Gefüge und somit zur Vereinfachung oder zum Entfall der thermomechanischen Materialbehandlung.

Eine pseudoplastische bzw. eine pseudoelastische Formgedächtnislegierung kann gemäß einem weiteren Ausführungsbeispiel des erfindungsgemäßen Verbindungsmittels dadurch bereitgestellt werden, dass die Formgedächtnislegierung neben Eisen und unvermeidbaren Verunreinigungen die folgenden Legierungselemente in Gew.-% enthält:
25 % ≤ Mn ≤ 32 %,
3 % ≤ Si ≤ 8 %,
3 % ≤ Cr ≤ 6 %,
Ni ≤ 3 %,
C ≤ 0,07 %, bevorzugt 0,01 % ≤ C ≤ 0,07 %, und/oder
N ≤ 0,07 %, bevorzugt 0,01 % ≤ N ≤ 0,07 %,
0,1 % ≤ Ti ≤ 1,5 % oder
0,1 % ≤ Nb ≤ 1,5 % oder
0,1 % ≤ W ≤ 1,5 % oder
0,1 % ≤ V ≤ 1,5 %.

Das Verbindungsmittel kann gemäß einer weiteren Ausgestaltung vorteilhaft dadurch ausgestaltet werden, dass im ersten Bereich des Verbindungsmittels Formschlussmittel zur Ausbildung eines Formschlusses mit dem ersten Verbindungspartner vorgesehen sind. Als Formschlussmittel kommen beispielsweise einfach ausgeprägte Vorsprünge in Frage, sofern es sich bei dem Verbindungsmittel z.B. um einen Gebirgsanker handelt. Diese können stoffschlüssig mit dem ersten Bereich des Verbindungsmittels beispielsweise verbunden sein.

Gemäß einer weiteren Ausgestaltung des Verbindungsmittels sind die Formschlussmittel lösbar mit dem ersten Bereich des Verbindungsmittels verbunden, wobei optional im ersten Bereich des Verbindungsmittels ein Gewinde zur lösbaren Befestigung der Formschlussmittel vorgesehen ist. Der erste und der zweite Bereich des Verbindungsmittels können einstückig sein, wobei vorzugsweise das Gewinde auf den ersten Bereich des Verbindungsmittels aufgeschrumpft sein kann. Eine andere Möglichkeit besteht darin, dass Gewinde mechanisch einzuformen, beispielsweise zu prägen. Darüber hinaus besteht die Möglichkeit das Gewinde auch über ein Aufschrumpfen einer Gewindehülse bereitzustellen. Als Formschlussmittel kann dann, wie beispielsweise bei einem Gebirgsanker, eine Platte dienen, welche eine Öffnung verfügt, durch welche das Gewinde des Verbindungsmittels durchgesteckt wird und die Platte über eine Mutter gesichert wird.

Weist das geformte Blech vorzugsweise eine durch den Zuschnitt des Blechs erzeugte Spitze auf, kann diese Spitze gleichzeitig, beispielsweise wenn der zweite Verbindungspartner aus einem weicheren Materialien besteht, zum Eintreiben des Verbindungsmittels in den zweiten Verbindungspartner verwendet werden.

Gemäß einer weiteren Ausgestaltung weist der zweite Bereich des Verbindungsmittels gegenüberliegend vom ersten Bereich des Verbindungsmittels ein als Schneidspitze oder Bohrkopf ausgebildetes Ende auf. Hierdurch wird ermöglicht, dass das Verbindungsmittel gleichzeitig zum Bohren von Löchern im zweiten Verbindungspartner verwendet werden kann, so dass das Verbindungsmittel gleichzeitig Bohrer und Verbindungsmittel sein kann. Weist das geformte Blech des zweiten Bereichs zumindest teilweise Profilierungen zur Materialausbringung auf, können die Bohreigenschaften des Verbindungsmittels weiter verbessert werden.

Gemäß einer weiteren Ausgestaltung des erfindungsgemäßen Verbindungsmittels weist der zweite Bereich des Verbindungsmittels ein längsgeschlitztes, geformtes Blech aus einer Formgedächtnislegierung auf. Das längsgeschlitzte Blech kann bei Aktivierung, insbesondere in weichem Untergrund, zu einer Auffächerung der geschlitzten Blechlaschen führen, so dass die Ausführungsform beispielsweise als Gründungsbefestigungsanker genutzt werden kann. Die Aktivierung des Verbindungsmittels kann auch bevorzugt über eine induktive und damit sehr effiziente Erwärmung erfolgen, also Eisen-Mangan-Silizium, Eisen-Mangan-Silizium-Chrom oder Eisen-Mangan-Silizium-Chrom-Nickel. Alternativ ist die Aktivierung durch eine exotherme-chemische Reaktion möglich.

Gemäß einer weiteren Ausgestaltung des Verbindungsmittels weisen die Längsschlitze des Blechs die Form von Dreiecken auf, wobei das Blech zu einer Kegelspitze kaltumgeformt wird.
Die Kegelspitze kann wiederum zum Eintreiben des Verbindungsmittels in den zweiten Verbindungspartner genutzt werden, um dann bei Aktivierung eine Ankerfunktion durch Aufspreizen der einzelnen dreieckig geformten, verbliebenen Laschen des Blechs aus einer Formgedächtnislegierung bereitzustellen.

Besonders vorteilhaft ist das Verbindungsmittel dann, wenn das Verbindungsmittel ein Gebirgsanker, ein Felsanker, eine Baugrubensicherung, ein Dübel, ein Fixierungs- und Montageanker oder ein Gründungsbefestigungsanker ist. Allen Verbindungsmitteln ist gemein, dass einerseits die Bereitstellung des Form- und/oder Kraftschlusses, beispielsweise beim Tunnelbau aufgrund der Vielzahl der verwendeten Gebirgsanker, besonders aufwendig ist, so dass eine einfache Aktivierung, wie sie bei den erfindungsgemäßen Verbindungsmitteln möglich ist, eine deutliche Kostenreduktion ermöglicht. Zudem sind die gegenüber herkömmlichen Systemen besser geeignet beispielsweise Erschüttungen, Setzungen und widrige Umweltbedingungen standzuhalten.

Darüber hinaus besteht die Möglichkeit bei dem erfindungsgemäßen Verbindungsmittel in der oben genannten Verwendung über den Zweiweg-Memoryeffekt von Formgedächtnislegierungen die Gebirgsanker beispielsweise lösbar zu gestalten, in dem diese beispielsweise auf eine besonders niedrige Temperatur gebracht werden, so dass der Aktivierungszustand rückgängig gemacht werden kann. In diesem Fall lässt sich der Form- und/oder Kraftschluss mit dem zweiten Verbindungspartner wieder lösen und das Verbindungsmittel einfach austauschen.

### Im Weiteren soll die Erfindung anhand von

Ausführungsbeispielen in Verbindung mit der Zeichnung näher erläutert werden. Die Zeichnung zeigt in
- Fig. 1: in einer Schnittansicht ein erstes Ausführungsbeispiel des Verbindungsmittels als Gebirgsanker in einem Tunnel,
- Fig. 2, 3: ein zweites Ausführungsbeispiel des Verbindungsmittels während der Montage der Formschlussmittel für den ersten Verbindungspartner,
- Fig. 4: in einem Ausführungsbeispiel ein quergeschlitztes Blech zur Bereitstellung des zweiten Bereichs eines Ausführungsbeispiels des Verbindungsmittels,
- Fig. 5: in einer schematischen, perspektivischen Darstellung das Blech aus Fig. 4 in geformten Zustand als Teil eines zweiten Bereichs eines Ausführungsbeispiels des Verbindungsmittels,
- Fig. 6: in einer schematischen, perspektivischen Darstellung der in Fig. 5 dargestellte zweite Bereich des Verbindungsmittels in noch nicht vollständig aktiviertem Zustand,
- Fig. 7: in einer perspektivischen Darstellung das Ausführungsbeispiel aus Fig. 5 vollständig in aktiviertem Zustand,
- Fig. 8: ein drittes Ausführungsbeispiel des Verbindungsmittels mit integriertem Bohrkopf,
- Fig. 9a) bis c): ein für den zweiten Bereich eines Ausführungsbeispiels vorgesehenes zugeschnittenes Blech in den Zuständen warmumgeformt, kaltumgeformt und aktiviert,
- Fig. 10: ein längsgeschlitztes Blech in einer Aufsicht für die Verwendung in einem weiteren Ausführungsbeispiel des Verbindungsmittels,
- Fig. 11a), b): ein Ausführungsbeispiel in einer schematischen Schnittansicht, welches das Blech aus Fig. 10 verwendet und als Gründungsbefestigungsanker ausgebildet ist und
- Fig. 12: ein Ausführungsbeispiel des Verbindungsmittels aus unterschiedlichen Werkstoffen.

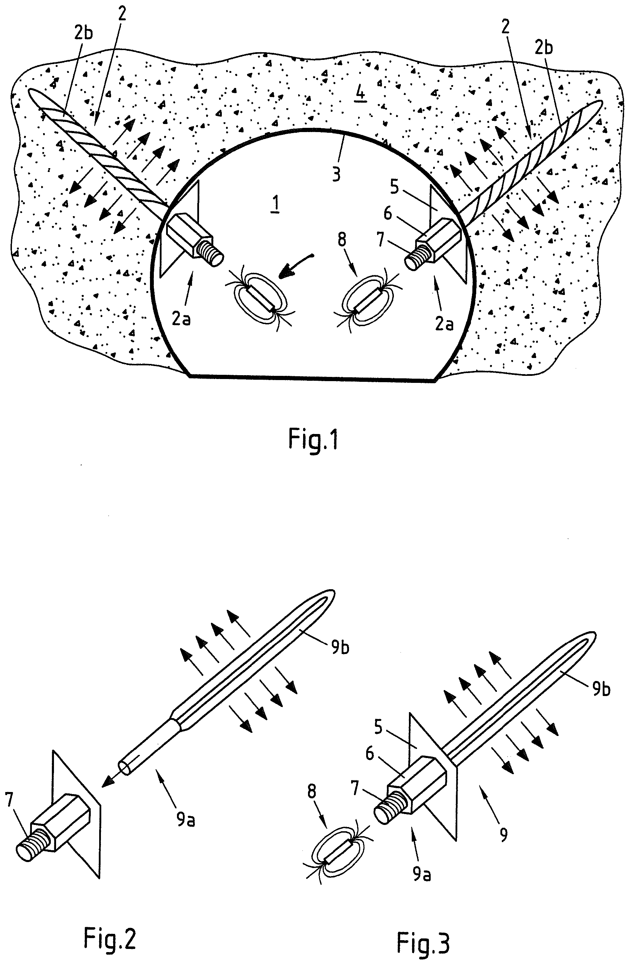

Fig. 1 zeigt in einer schematischen Schnittansicht einen Tunnel 1, in welchem Ausführungsbeispiele des erfindungsgemäßen Verbindungsmittels 2 mindestens als Gebirgsanker verwendet werden. Das Verbindungsmittel 2 weist zur Bereitstellung einer form- und/oder kraftschlüssigen Verbindung zwischen der Tunnelauskleidung 3 und dem Gebirge 4 oder dessen Schichten einen ersten Bereich 2a auf, welcher mit dem ersten Verbindungspartner, hier der Tunnelauskleidung 3 über einen Form- und/oder Kraftschluss im Eingriff steht. Der zweite Bereich 2b des Verbindungsmittels steht mit dem Gebirge 4 oder dessen Schichten über einen Form- und/oder Kraftschluss im Eingriff. Im zweiten Bereich 2b des Verbindungsmittels ist ein aus einem vorzugsweise flachen Blechstreifen spiralförmig geformter Bereich vorgesehen, welcher bei Aktivierung, wie mit den Pfeilen angedeutet, eine Durchmesservergrößerung verursacht, so dass der Bereich 2b des Verbindungsmittels im Gebirge 4 über einen Form- und/oder Kraftschluss fest im Eingriff steht. Das vorzugsweise aus einer Formgedächtnislegierung und als geformter Streifen verwendete Blech des Bereichs 2b kann auf einfache Weise durch Kaltumformen eines entsprechend geformten Blechzuschnitts einer Formgedächtnislegierung vom Typ beispielsweise Fe-Mn oder vom Typ Fe-Mn-Si oder vom Typ Fe-Mn-Si-Cr oder vom Typ Fe-Mn-Si-Cr-Ni hergestellt werden. Die Kaltumformung bewirkt bei der Formgedächtnislegierung, dass diese bei Aktivierung durch Erwärmen wiederum in die ursprüngliche, flache Form sich zurückformt. Hierdurch können enorme Kräfte bereitgestellt werden, so dass beispielsweise auch die Gebirgsanker, wie sie in Fig. 1 dargestellt sind, enormen Zugkräften widerstehen können.

Um den Formschluss mit dem ersten Verbindungspartner bereitzustellen, ist wie in Fig. 1 dargestellt, als Formschlussmittel eine Platte 5 sowie eine Mutter 6 vorgesehen, welche auf einem Gewinde 7 das Formschlussmittel lösbar mit dem Verbindungsmittel 2 verbindet. Angedeutet sind in Fig. 1 darüber hinaus die Spulen 8, welche zur induktiven Erwärmung, d.h. zur Einbringung eines Wirbelstroms in das Verbindungsmittel verwendet werden.

Das Verbindungsmittel 2 kann einstückig mit dem Gewinde 7 hergestellt werden. Allerdings besteht auch die Möglichkeit, das Gewinde 7 separat durch einen anderen Werkstoff herzustellen und dieses dann auf das Verbindungsmittel 9 im ersten Bereich 9a aufzuschrumpfen, wie in Fig. 2 angedeutet ist. Das Verbindungsmittel 9 in den Fig. 2 und 3 weist im zweiten Bereich, welcher zur Bereitstellung des Form- und/oder Kraftschlusses mit dem zweiten Verbindungspartner ausgebildet ist, ein längsgeschlitztes, geformtes Blech aus einer Formgedächtnislegierung auf, welche beispielsweise die folgende Zusammensetzung neben Eisen und unvermeidbaren Verunreinigungen in Gew.-% enthält:
25 % ≤ Mn ≤ 32 %,
3 % ≤ Si ≤ 8 %,
3 % ≤ Cr ≤ 6 %,
Ni ≤ 3 %,
C ≤ 0,07 %, bevorzugt 0,01 % ≤ C ≤ 0,07 %, und/oder
N ≤ 0,07 %, bevorzugt 0,01 % ≤ N ≤ 0,07 %,
0,1 % ≤ Ti ≤ 1,5 % oder
0,1 % ≤ Nb ≤ 1,5 % oder 0,1 % ≤ W ≤ 1,5 %,
0,1 % ≤ V ≤ 1,5 %.

Durch die genannte Zusammensetzung kann beispielsweise ein superelastisches Verhalten des zweiten Bereichs des Verbindungsmittels bereitgestellt werden. Bei dem superelastischen bzw. pseudoelastischen Verhalten der Formgedächtnislegierungen kann das Dehnungsvermögen beispielsweise das konventioneller Metalle um mindestens das 5-fache übertreffen. Fig. 3 zeigt in einer perspektivischen Darstellung das Verbindungsmittel mit montierten Formschlussmitteln 5 inklusive der Befestigungsmutter 6 und der zur Aktivierung der Formschlusslegierung verwendeten Spule 8. Das in den Fig. 2 und 3 dargestellte Ausführungsbeispiel weist damit einen zweiteiligen Aufbau einerseits den aus einer Formgedächtnislegierung bestehenden zweiten Bereich sowie den mit aufgeschrumpftem Gewindebereich versehenen ersten Bereich 9a auf.

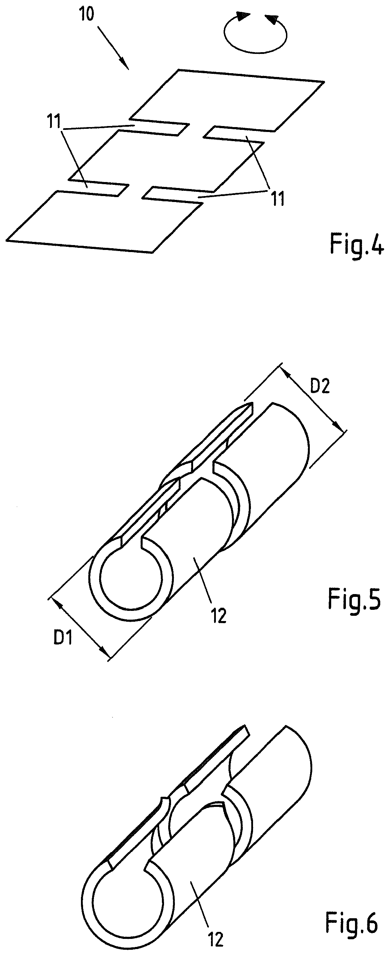

In Fig. 4 ist nun ein Blech aus einer Formgedächtnislegierung dargestellt, welches Längsschlitze 11 aufweist. Das Blech 10 aus Fig. 4 wird entsprechend den Pfeilen angedeutet, geformt, so dass ein länglicher, in schmalen Segmenten unterteilter Körper entsteht, der als zweiter Bereich eines Verbindungsmittels verwendet wird. In Fig. 5 ist in einer perspektivischen Darstellung ein Segment des geformten Blechs aus Fig. 4 dargestellt. Das dargestellte Segment des Blechs 10 kann beispielsweise einen geringeren Durchmesser aufweisen als die in Richtung des ersten Bereiches anschließenden Segmente des quergeschlitzten, geformten Blechs bestehend aus einer Formgedächtnislegierung. Hierdurch kann der zweite Bereich eines entsprechenden Ausführungsbeispiels des Verbindungsmittels in den Segmentbereichen den einzelnen Umgebungsbedingungen, beispielsweise herausgebrochenen Felsbereichen bei dessen Ausdehnung besser angepasst werden, so dass ein verbesserte Form- und/oder Kraftschlusseigenschaften gewährleistet werden können. Durch veränderliche Durchmesser, beispielsweise durch Bereitstellung eines schmaler werdenden Durchmessers zur Spitze hin, kann beispielsweise den typischen Geometrien von Bohrungen Rechnung getragen werden.

In Fig. 6 ist nun das Segment 12 in aktiviertem in noch nicht vollständig aktiviertem Zustand dargestellt. Die vollständige Aktivierung erfolgt, wie bereits ausgeführt, üblicherweise durch eine Erwärmung, wobei die zusätzlich eingebrachte Energie in eine weitere Verformung resultiert. Eine solche mehrstufige Verformung kann beispielsweise erreicht werden durch den Einsatz unterschiedlicher Legierung im Bauteil oder sequentielle Erwärmung von Bauteilsektionen oder gezielter Ausnutzung der Wärmeleitung. Die Umformung zeigt eine deutliche Verbreiterung des Durchmessers an den Grenzen zum folgenden Sektor in Richtung des ersten Bereichs des Verbindungsmittels. Hierdurch wird ein einfacher Formschluss beispielsweise mit einer Gebirgswand, welche den dargestellten Bereich des Verbindungsmittels in Fig. 6 umgibt, gewährleistet. Es ist leicht vorstellbar, dass hierdurch verbesserte Formschlusseigenschaften des Verbindungsmittels erzielt werden.

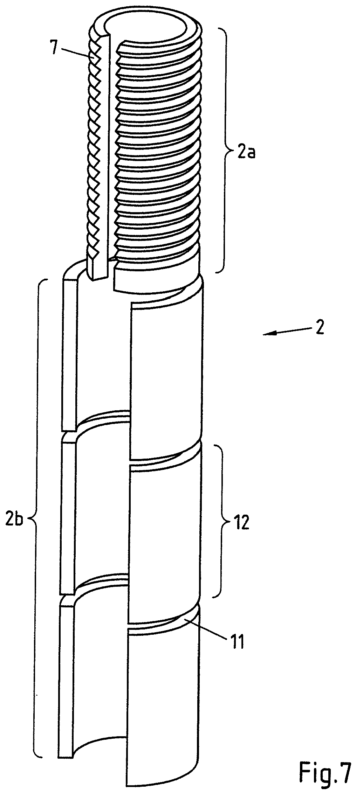

Fig. 7 zeigt in einer perspektivischen Darstellung einen Gebirgsanker mit einem aus einem geformten Blech aus einer Formgedächtnislegierung bestehenden zweiten Teil 2b, welcher Segmente 12 aufweist, die durch Querschlitze 11 getrennt sind. Der zweite Bereich 2b des in Fig. 7 dargestellten Verbindungsmittels ist aktiviert und zeigt einen vergrößerten Querschnitt. Anhand von Fig. 7 ist leicht vorstellbar, dass sich das Verbindungsmittel aufgrund der unterschiedlichen Segmente flexibel an unterschiedliche Querschnitte einer Bohrung anpassen kann und einen sehr guten Kraft- bzw. Formschluss bereitstellen kann.

Der erste Bereich 2a des in Fig. 7 dargestellten Verbindungsmittels 2 weist ein Gewinde 7 auf, das vorliegend nicht aus einer Formgedächtnislegierung bereitgestellt ist, um das Anbringen von Formschlussmitteln nicht durch die Aktivierung des zweiten Bereichs 2b des Verbindungsmittels negativ zu beeinflussen.

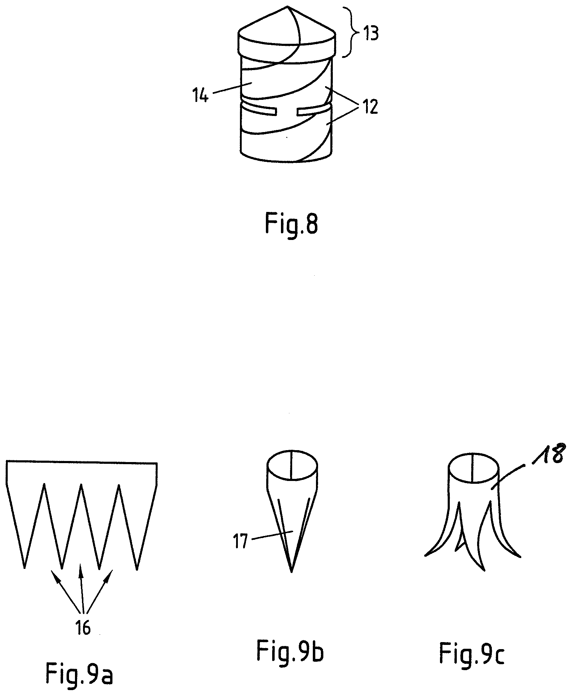

Eine Kombination aus einem Bohrer und einem Verbindungsmittel zeigt das in Fig. 8 schematisch dargestellte Ausführungsbeispiel. Neben den geformten Segmenten eines Blechs aus einer Formgedächtnislegierung 12 weist das in Fig. 7 dargestellte Ausführungsbeispiel einen Bohrkopf 13 auf, mit welchem das Verbindungsmittel beispielsweise in einen zweiten Verbindungspartner eingebracht werden kann. Die in dem dargestellten Ausführungsbeispiel angedeuteten Einprägungen 14 der Segmente 12 dienen zur Materialausbringung und verbessern das Bohrverhalten des bohrfähigen Verbindungsmittels. Bei Aktivierung des in Fig. 8 dargestellten Verbindungsmittels vergrößert sich insbesondere der Durchmesser der nicht unmittelbar mit dem Bohrkopf verbundenen Segmente 12 des zweiten Bereichs des Verbindungselements, so dass diese das Verbindungsmittel mit dem zweiten Verbindungspartner, also beispielsweise dem Gebirge bzw. dessen Schichten in einem Tunnel zu einem hochfesten Form- und/oder Kraftschluss führen. Für Bohrwerkzeuge ist die eisenbasierte Formgedächtnislegierung besonders geeignet, da sie über eine höhere

Aktivierungstemperatur gegenüber den anderen Formgedächtnislegierungen verfügt und somit das Risiko einer versehentlich, vorzeitigen Aktivierung minimiert.

In Fig. 9 ist nun skizzenhaft dargestellt, welche Formänderungen mit Werkstoffen mit Formgedächtnis erreicht werden können. Beispielsweise zeigt Fig. 9a) in einer Aufsicht ein Blech 15 mit dreieckigen Längsschlitzen. Das Blech 15 kann dann beispielsweise wie in Fig. 9b) dargestellt, durch eine Kaltumformung in eine Kegelspitze 17 umgeformt werden, welche dann in aktiviertem Zustand, wie in Fig. 9c) dargestellt abgespreizte Arme aufweist, welche sich dann in einem weichen Untergrund beispielsweise verkrallen können, so dass die Kegelspitze in aktiviertem zustand als Anker dient. Hierdurch wird auch ein Kraft- und/oder Formschluss in weichem Untergrund ermöglicht.

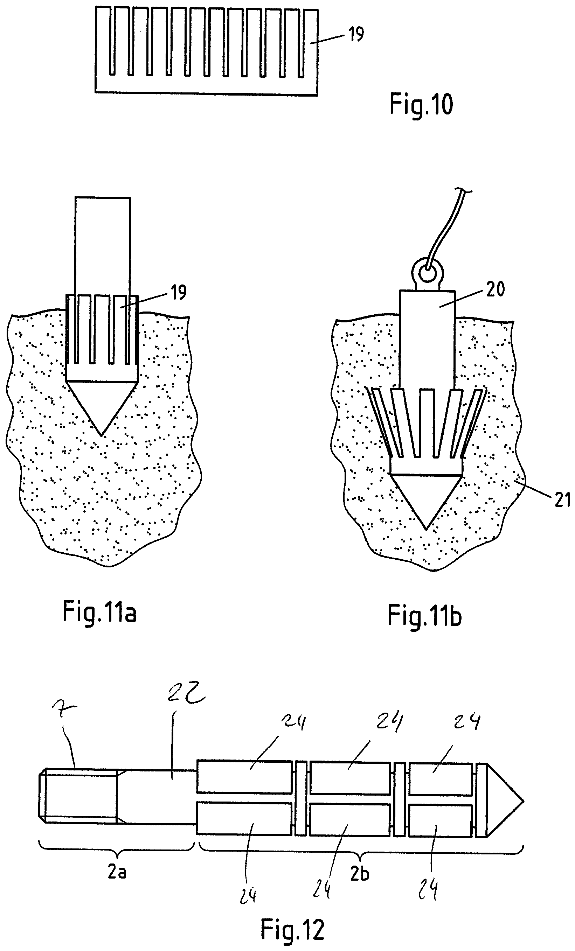

Zur Anwendung kann dies beispielsweise auch in umgekehrter Form erfolgen. Hierzu ist in Fig. 10 ein längsgeschlitztes Blech 19 dargestellt, welches durch eine Kaltumformung zu einem rohrförmigen Körper umgeformt wird, welcher mit den Schlitzöffnungen nach oben an einem Verbindungsmittel 20 angeordnet ist. Ein solches Verbindungsmittel 20 wird in Gewässerböden beispielsweise in den Meeresboden 21 eingebracht, wie in Fig. 11a) dargestellt ist. Bei der Aktivierung spreizen sich die einzelnen Laschen des Blechs 19 so ab, dass diese eine Selbsthemmung des Verbindungsmittels 20 im Meeresboden verursachen, Fig. 11b). Als zweiter Verbindungspartner ist hier beispielsweise eine Bohrinsel oder eine schwimmende Windenergieanlage vorstellbar, welche hier nicht dargestellt ist.

In Fig. 12 ist ein Fixierungsanker dargestellt, der stoffschlüssig ausgestaltet ist und welcher einen durchgehenden Stift 22 sowie am Ende des zweiten Bereichs 2b eine Spitze 23 zum Eintreiben in beispielsweise eine Bohrung aufweist. An dem gegenüberliegenden Ende im ersten Bereich 2a ist ein Gewinde 7 zum Aufnehmen einer Mutter vorgesehen. Beispielsweise ist der Stift 22 aus konventionellem Stahl gefertigt. Der zweite Bereich 2b des Stiftes ist mit mehreren Mitteln 24 zur Bereitstellung des Form- und/oder Kraftschlusses, welche aus zumindest teilweise flachen Werkstoffen mit Formgedächtniseigenschaften hergestellt sind, verbunden. Bevorzugt werden als Werkstoffe Formgedächtnislegierungen und aus den Legierungen hergestellte und dann umgeformte Bleche eingesetzt. Prinzipiell können aber auch andere Formgedächtniswerkstoffe hier verwendet werden.

Neben den in den Fig. 1 bis 12 dargestellten Anwendungen, kann auf einfache Weise das Verbindungsmittel auch als Baugrubensicherung, Dübel oder Fixierungs- und Montageanker verwendet werden. Hierzu bedarf es lediglich der vom Verbindungsmittel bereitgestellten Eigenschaften, durch einen gerollten Werkstoff mit Formgedächtnis einen Form- und/oder Kraftschluss mit einem Verbindungspartner und über den ersten Bereich einen Form- und/oder Kraftschluss mit dem zweiten Verbindungspartner bereitzustellen. Die dargestellten Ausführungsbeispiele lassen sich auf die genannten Anwendungen ohne Weiteres adaptieren. Denkbar ist auch eine Aktivierung des Formgedächtnisses durch andere Mechanismen, beispielsweise auch eine magnetische Aktivierung des Formgedächtnisses.

## Patentansprüche

1. Verbindungsmittel (2,9) zur Bereitstellung einer form- und/oder kraftschlüssigen Verbindung zwischen mindestens zwei Verbindungspartnern (3,4), wobei das Verbindungsmittel (2,9) mindestens einen ersten Bereich (2a) aufweist, welcher dafür ausgebildet ist, mit dem ersten Verbindungspartner (3) über einen Form- und/oder Kraftschluss im Eingriff zu stehen, und mindestens ein zweiter Bereich (2b) vorgesehen ist, welcher dafür ausgebildet ist, mit dem mindestens zweiten Verbindungspartner (4) über einen Form- und/oder Kraftschluss im Eingriff zu stehen,
**dadurch gekennzeichnet, dass** zumindest der zweite Bereich (2b) des Verbindungsmittels einen aus einem zumindest teilweise flachen Werkstoff aus einer Eisenlegierung mit Formgedächtniseigenschaften geformten Bereich aufweist, welcher bei Aktivierung durch eine Formänderung den Form- und/oder Kraftschluss mit dem zweiten Verbindungspartner (4) gewährleistet, der zweite Bereich (9b) ein geformtes Blech mit einem Längsschlitz bestehend aus einer Formgedächtnislegierung aufweist und das geformte Blech (10) zumindest teilweise in Querrichtung geschlitzt ist.

2. Verbindungsmittel nach Anspruch 1,
**dadurch gekennzeichnet, dass** als Formgedächtnislegierung eine Fe-Mn-Legierung, Fe-Mn-Si-Legierung, eine Fe-Mn-Si-Cr-Legierung oder eine Fe-Mn-Si-Cr-Ni-Legierung verwendet wird.

3. Verbindungsmittel nach einem der Ansprüche 1 oder 2, **dadurch gekennzeichnet, dass** die Formgedächtnislegierung neben Eisen und unvermeidbaren Verunreinigungen die folgenden Legierungselemente in Gew.-% enthält:
12 % ≤ Mn ≤ 45 %,
1 % ≤ Si ≤ 10 %,
Cr ≤ 20 %,
Ni ≤ 20%,
Mo ≤ 20%,
Cu ≤ 20%,
Co ≤ 20%,
Al ≤ 10%,
Mg ≤ 10%,
V ≤ 2 %,
Ti ≤ 2 %,
Nb ≤ 2 %,
W ≤ 2 %,
C ≤ 1 %,
N ≤ 1 %,
P ≤ 0,3 %,
Cr ≤ 0,3 %,
B ≤ 0,01 %.

4. Verbindungsmittel nach einem der Ansprüche 1 bis 3, **dadurch gekennzeichnet, dass** die Formgedächtnislegierung neben Eisen und unvermeidbaren Verunreinigungen die folgenden Legierungselemente in Gew.-% enthält:
25 % ≤ Mn ≤ 32 %,
3 % ≤ Si ≤ 8 %,
3 % ≤ Cr ≤ 6 %,
Ni ≤ 3 %,
C ≤ 0,07 %, bevorzugt 0,01 % ≤ C ≤ 0,07 %, und/oder
N ≤ 0,07 %, bevorzugt 0,01 % ≤ N ≤ 0,07 %,
0,1 % ≤ Ti ≤ 1,5 % oder
0,1 % ≤ Nb ≤ 1,5 % oder 0,1 % ≤ W ≤ 1,5 %
0, 1 % ≤ V ≤ 1,5 %.

5. Verbindungsmittel nach einem der Ansprüche 1 bis 4,
**dadurch gekennzeichnet, dass** im ersten Bereich (2a) des Verbindungsmittels Formschlussmittel (5,6) zur Ausbildung eines Formschlusses mit dem ersten Verbindungspartner (3) vorgesehen sind.

6. Verbindungsmittel nach einem der Ansprüche 1 bis 5,
**dadurch gekennzeichnet, dass** die Formschlussmittel (5,6) lösbar mit dem ersten Bereich (2a) des Verbindungsmittels verbunden sind, wobei optional im ersten Bereich (2a) des Verbindungsmittels ein Gewinde (7) zur lösbaren Befestigung der Formschlussmittel (5,6) vorgesehen ist.

7. Verbindungsmittel nach Anspruch 1,
**dadurch gekennzeichnet, dass** das geformte Blech (10) eine durch den Zuschnitt des Blechs erzeugte Spitze aufweist.

8. Verbindungsmittel nach einem der Ansprüche 1 bis 7,
**dadurch gekennzeichnet, dass** der zweite Bereich (2b) des Verbindungsmittels gegenüberliegend vom ersten Bereich des Verbindungsmittels ein als Schneidspitze oder Bohrkopf (13) ausgebildetes Ende aufweist und optional das geformte Blech (10) des zweiten Bereichs (2b) zumindest teilweise Profilierungen (14) zur Materialausbringung aufweist.

9. Verbindungsmittel nach einem der Ansprüche 1 bis 8,
**dadurch gekennzeichnet, dass** der zweite Bereich (2b) des Verbindungsmittels ein längsgeschlitztes geformtes Blech (19) aus einer Formgedächtnislegierung aufweist.

10. Verbindungsmittel nach einem der Ansprüche 1 bis 9,
**dadurch gekennzeichnet, dass** die Längsschlitze (16) des Blechs die Form von Dreiecken aufweisen und das Blech zu einer Kegelspitze (17) kaltumgeformt wird.

11. Verbindungsmittel nach einem der Ansprüche 1 bis 10,
**dadurch gekennzeichnet, dass** das Verbindungsmittel ein Gebirgsanker, ein Felsanker, eine Baugrubensicherung, ein Dübel, ein Fixierungs- und Montageanker oder ein Gründungsbefestigungsanker ist.

## Claims

1. Connecting means (2, 9) for providing a form-fitting and/or a force-fitting connection between at least two connecting partners (3, 4), wherein the connecting means (2, 9) has at least one first region (2a) which is designed to engage with the first connecting partner (3) by way of a form fit and/or a force fit, and at least one second region (2b) is provided which is designed to engage with the at least second connecting partner (4) by way of a form fit and/or a force fit,
**characterized in that**
at least the second region (2b) of the connecting means has a region which is formed from an at least partially flat material composed of an iron alloy with shape memory characteristics and which, when activated, ensures the form fit and/or force fit with the second connecting partner (4) by way of a change in shape, the second region (9b) has a shaped metal sheet with a longitudinal slot and composed of a shape-memory alloy and the shaped metal sheet (10) is at least partially slotted in the transverse direction.

2. Connecting means according to Claim 1,
**characterized in that**, as shape memory alloy, use is made of a Fe-Mn alloy, Fe-Mn-Si alloy, a Fe-Mn-Si-Cr alloy or a Fe-Mn-Si-Cr-Ni alloy.

3. Connecting means according to either of Claims 1 and 2,
**characterized in that**
the shape memory alloy comprises, aside from iron and inevitable impurities, the following alloy elements in wt%:
12 % ≤ Mn ≤ 45 %,
1 % ≤ Si ≤ 10 %,
Cr ≤ 20 %,
Ni ≤ 20%,
Mo ≤ 20%,
Cu ≤ 20%,
Co ≤ 20%,
Al ≤ 10%,
Mg ≤ 10%,
V ≤ 2 %,
Ti ≤ 2 %,
Nb ≤ 2 %,
W ≤ 2 %,
C ≤ 1 %,
N ≤ 1 %,
P ≤ 0.3 %,
Zr ≤ 0.3 %,
B ≤ 0.01 %.

4. Connecting means according to one of Claims 1 to 3,
**characterized in that**
the shape memory alloy comprises, aside from iron and inevitable impurities, the following alloy elements in wt%:
25 % ≤ Mn ≤ 32 %,
3 % ≤ Si ≤ 8 %,
3 % ≤ Cr ≤ 6 %,
Ni ≤ 3 %,
C ≤ 0.07 %, preferably 0.01 % ≤ C ≤ 0.07 %, and/or
N ≤ 0.07 %, preferably 0.01 % ≤ N ≤ 0.07 %,
0.1 % ≤ Ti ≤ 1.5 % or
0.1 % ≤ Nb ≤ 1.5 % or 0.1 % ≤ W ≤ 1.5 %
0.1 % ≤ V ≤ 1.5 %.

5. Connecting means according to one of Claims 1 to 4,
**characterized in that**,
in the first region (2a) of the connecting means, there are provided form-fit means (5, 6) for forming a form fit with the first connecting partner (3).

6. Connecting means according to one of Claims 1 to 5,
**characterized in that**
the form-fit means (5, 6) are detachably connected to the first region (2a) of the connecting means, wherein optionally, in the first region (2a) of the connecting means, there is provided a thread (7) for the detachable fastening of the form-fit means (5, 6).

7. Connecting means according to Claim 1,
**characterized in that**
the shaped metal sheet (10) has a tip generated as a result of the cutting of the metal sheet.

8. Connecting means according to one of Claims 1 to 7,
**characterized in that**
the second region (2b) of the connecting means, opposite the first region of the connecting means, has an end in the form of a cutting tip or drilling head (13), and optionally, the shaped metal sheet (10) of the second region (2b) at least partially has profilings (14) for discharging material.

9. Connecting means according to one of Claims 1 to 8,
**characterized in that**
the second region (2b) of the connecting means has a longitudinally slotted shaped metal sheet (19) composed of a shape memory alloy.

10. Connecting means according to one of Claims 1 to 9,
**characterized in that**
the longitudinal slots (16) of the metal sheet are of triangular form and the metal sheet is cold-worked to form a conical tip (17).

11. Connecting means according to one of Claims 1 to 10,
**characterized in that**
the connecting means is a rock anchor, a rock bolt, an excavation support, a plug, a fixing and installation anchor, or a ground fastening anchor.

## Revendications

1. Moyen de liaison (2, 9) destiné à former une liaison à ajustement de forme et/ou à interaction de force entre au moins deux partenaires de liaison (3, 4), le moyen de liaison (2, 9) présentant au moins une première partie (2a) configurée pour engager le premier partenaire de liaison (3) par l'intermédiaire d'un raccordement à ajustement de forme et/ou à interaction de force et au moins une deuxième partie (2b) configurée pour engager le ou les deuxièmes partenaires de liaison (4) par l'intermédiaire d'un raccordement à ajustement de forme et/ou à interaction de force, **caractérisé en ce que**
au moins la deuxième partie (2b) du moyen de liaison présente une partie au moins en partie plate, formée d'un matériau d'alliage de fer à propriétés de mémoire de forme qui assure la liaison à ajustement de forme et/ou à interaction de force avec le deuxième partenaire de liaison (4) lors d'une activation par une modification de forme,
**en ce que** la deuxième partie (9b) présente une tôle façonnée dotée d'une fente longitudinale, en alliage à mémoire de forme, la tôle façonnée (10) étant fendue au moins en partie dans la direction transversale.

2. Moyen de liaison selon la revendication 1, **caractérisé en ce que** l'alliage à mémoire de forme utilisé est un alliage Fe-Mn, un alliage Fe-Mn-Si, un alliage Fe-Mn-Si-Cr ou un alliage Fe-Mn-Si-Cr-Ni.

3. Moyen de liaison selon l'une des revendications 1 ou 2, **caractérisé en ce que** l'alliage à mémoire de forme contient en plus du fer et des impuretés inévitables les éléments d'alliage suivants, en % en poids :
12 % ≤ Mn ≤ 45 %,
1 % ≤ Si ≤ 10 %,
Cr ≤ 20 %,
Ni ≤ 20 %,
Mo ≤ 20 %,
Cu ≤ 20 %,
Co ≤ 20 %,
Al ≤ 10 %,
Mg ≤ 10 %,
V ≤ 2 %,
Ti ≤ 2 %,
Nb ≤ 2 %,
W ≤ 2 %,
C ≤ 1 %,
N ≤ 1 %,
P ≤ 0,3 %,
Zr ≤ 0,3 %,
B ≤ 0,01 %.

4. Moyen de liaison selon l'une des revendications 1 à 3, **caractérisé en ce que** l'alliage à mémoire de forme contient en plus du fer et des impuretés inévitables les éléments d'alliage suivants, en % en poids :
25 % ≤ Mn ≤ 32 %,
3 % ≤ Si ≤ 8 %,
3 % ≤ Cr ≤ 6 %,
Ni ≤ 3 %,
C ≤ 0,07 %, de préférence 0,01 % ≤ C ≤ 0,07 %, et/ou
N ≤ 0,07 %, de préférence 0,01 % ≤ N ≤ 0,07 %,
0,1 % ≤ Ti ≤ 1,5 % ou
0,1 % ≤ Nb ≤ 1,5 % ou 0,1 % ≤ W ≤ 1,5 %
0,1 % ≤ V ≤ 1,5 %.

5. Moyen de liaison selon l'une des revendications 1 à 4, **caractérisé en ce que** des moyens (5, 6) de correspondance à ajustement de forme sont prévus dans la première partie (2a) du moyen de liaison pour former une correspondance à ajustement de forme avec le premier partenaire de liaison (3).

6. Moyen de liaison selon l'une des revendications 1 à 5, **caractérisé en ce que** les moyens (5, 6) de mise en correspondance à ajustement de forme sont reliés de manière soluble à la première partie (2a) du moyen de liaison, un filetage (7) de fixation soluble des moyens (5, 6) de mise en correspondance à ajustement de forme étant facultativement prévu dans la première partie (2a) du moyen de liaison.

7. Moyen de liaison selon la revendication 1, **caractérisé en ce que** la tôle façonnée (10) présente une pointe formée par la découpe de la tôle.

8. Moyen de liaison selon l'une des revendications 1 à 7, **caractérisé en ce que** la deuxième partie (2b) du moyen de liaison présente face à la première partie du moyen de liaison une extrémité configurée en pointe taraudeuse ou tête de forage (13), la tôle façonnée (10) de la deuxième partie (2b) présentant facultativement des profils (14) au moins partiels en vue d'extraire du matériau.

9. Moyen de liaison selon l'une des revendications 1 à 8, **caractérisé en ce que** la deuxième partie (2b) du moyen de liaison présente une tôle façonnée (19) fendue longitudinalement, en alliage à mémoire de forme.

10. Moyen de liaison selon l'une des revendications 1 à 9, **caractérisé en ce que** la fente allongée (16) de la tôle présente la forme d'un triangle et **en ce que** la tôle est façonnée à froid en une pointe conique (17).

11. Moyen de liaison selon l'une des revendications 1 à 10, **caractérisé en ce que** le moyen de liaison est un ancrage alpin, un ancrage dans la roche, une fixation d'excavation, une cheville, un ancrage de fixation et de montage ou un ancrage de fixation de fondation.
